# FASCICULE DE BREVET EUROPEEN

(11) **EP 1 935 708 B1**
(45) Date de publication et mention de la délivrance du brevet: **17.02.2010**
(21) Numéro de dépôt: 07301658.6
(22) Date de dépôt: 11.12.2007
(51) Int. Cl.: B60N 2/20, B60N 2/30

(54) **Dispositif de déverrouillage du dossier d'un siège arrière de véhicule automobile pour autoriser sa mise en tablette**
Entriegelungsvorrichtung um die Rückenlehne eines Kraftfahrzeug-Hintersitzes in eine Tischposition zu bringen
Device for unlocking the backrest of the rear seat of an automotive vehicle to bring it in a horizontal table position

(30) Priorité: 22.12.2006 FR 0655906
(43) Date de publication de la demande: 25.06.2008
(73) Titulaire: PEUGEOT CITROËN AUTOMOBILES SA, 78140 Vélizy Villacoublay (FR)
(72) Inventeur: Gomes, Antonio, 78560, Le Port Marly (FR)

(56) Documents cités:
- EP-A1- 0 023 863
- DE-A1- 3 211 158
- DE-C1- 19 949 759
- FR-A1- 2 642 377
- US-A- 4 932 709
- US-A- 5 718 481

## Description

La présente invention est relative à un dispositif de déverrouillage du dossier d'un siège de véhicule automobile, permettant de réaliser son pivotement autour d'un axe transversal à l'aide d'un effort exercé manuellement sur ce dossier afin de le rabattre sur l'assise du siège pour atteindre une position dans laquelle il est étroitement appliqué sur celle-ci, de telle sorte que le basculement ultérieur de ce siège avec le dossier ainsi replié, puisse notamment permettre d'assurer son escamotage complet dans une fosse ou cuvette prévue à cet effet dans le plancher de l'habitacle de ce véhicule.

Dans certains véhicules automobiles, les sièges arrière, disposés généralement selon deux rangées successives, sont parfois susceptibles d'être totalement escamotés dans des cuvettes de réception prévues dans le plancher de l'habitacle afin de libérer entièrement l'espace disponible derrière les sièges avant jusqu'à la porte du hayon arrière. Un levier approprié, se repliant de préférence à l'intérieur du siège lorsque celui-ci est escamoté sous le plancher, est néanmoins facilement accessible pour permettre, à l'inverse, de relever le siège pour l'extraire de la cuvette et le ramener en position d'utilisation normale.

Cet escamotage des sièges après repliement de leur dossier sur l'assise, est généralement désigné par l'expression de « mise en tablette », dans cette position le dossier du siège est parallèle à l'assise. Compte tenu de l'épaisseur des sièges, le dossier du siège est en deux parties, il comprend un plateau d'appui dorsal articulé autour d'un axe premier transversal et un flasque articulé autour d'un second axe transversal.

Les sièges du véhicule sont par ailleurs fréquemment susceptibles, lorsqu'ils sont en position d'utilisation normale, de présenter la faculté de pouvoir modifier l'orientation relative de leur dossier par rapport à l'assise pour accroître le confort de l'usager qui peut ainsi, dans une limite donnée, incliner légèrement ce dossier vers l'arrière, en le faisant pivoter autour d'un axe qui est parallèle mais distinct de celui autour duquel s'effectue le rabattement du dossier avant la mise en tablette du siège.

Or, si le dossier n'est pas totalement relevé autour de l'axe correspondant et verrouillé dans cette position vis-à-vis de l'assise avant qu'il ne soit rabattu sur celle-ci, on conçoit que son basculement ne permettra pas de réaliser une mise en tablette convenable et en particulier d'obtenir, après escamotage dans le plancher de l'habitacle, une surface parfaitement plane.

De plus, en l'absence de verrouillage, le dossier du siège pourra le cas échéant se déplacer intempestivement et notamment se déployer de façon plus ou moins importante dans l'habitacle, de manière non commandée.

La présente invention a pour objet un dispositif qui permet, dans la continuité du mouvement, préalablement à la mise en tablette d'un siège et à son basculement pour l'amener dans une cuvette de réception prévue dans le plancher du véhicule, d'assurer automatiquement le relèvement du dossier autour d'un premier axe de pivotement pour l'amener dans une position d'avancée maximale, sensiblement verticale, dans laquelle il peut être verrouillé, avant que ce dossier ne soit rabattu manuellement contre l'assise autour d'un autre axe de pivotement, parallèle au premier.

Nous connaissons dans l'état de la technique le document US5718481 qui décrit un dispositif selon le préambule de la revendication 1 permettant de replier le dossier sur l'assise, le dossier comprenant un plateau d'appui dorsal étant articulé autour d'un premier axe transversal permettant de rabattre le plateau sur l'assise et d'un flasque de support de plateau, monté rotatif autour d'un second axe transversal parallèle au premier, porté par l'assise pour permettre de modifier l'orientation du dossier, le flasque comporte également des moyens débrayables pour réaliser le redressement du dossier, ces moyens coopère avec un levier de déverrouillage articulé sur le flasque susceptible d'être actionné par l'usager, le dispositif comporte un doigt de commande solidaire du plateau d'appui dorsal du dossier, ce doigt est destiné à décrire une rainure circulaire ménagée dans le flasque lorsque le plateau pivote autour du premier axe afin d'être rabattu sur l'assise, le levier comporte une extension qui pivote avec lui de manière qu'il agisse sur les moyens débrayables pour provoquer le redressement du dossier vers l'avant autour du second axe puis le doigt de commande se bloque dans une dépression de sa rainure de manière à immobiliser celui-ci et maintenir le plateau en position rabattue.

A cet effet, le dispositif considéré, pour un siège arrière de véhicule automobile comportant une assise et un dossier constitué d'un plateau d'appui dorsal, articulé autour d'un premier axe transversal permettant de rabattre manuellement ce plateau sur l'assise, et d'un flasque de support du plateau, ce flasque étant lui-même monté à rotation autour d'un second axe transversal, parallèle au premier, porté par l'assise de manière à permettre de modifier l'orientation relative du dossier par rapport à la verticale pour augmenter le confort de l'usager, le flasque de support comportant des moyens d'immobilisation débrayables pour le redressement automatique du dossier dans une position maximale dirigée vers l'avant, ces moyens coopérant avec un levier de déverrouillage articulé sur le flasque et apte à être actionné par l'usager, un doigt de commande étant solidaire du plateau d'appui dorsal du dossier, ce doigt étant propre à décrire une rainure circulaire ménagée dans le flasque lorsque le plateau pivote autour du premier axe pour être rabattu sur l'assise, le levier comportant une extension qui pivote avec lui de telle sorte que, dans un premier temps, il agit sur les moyens débrayables pour provoquer le redressement du dossier dans sa position maximale vers l'avant autour du second axe, avant que l'extension du levier ne se dispose, dans un second temps, sous le doigt de commande dans sa rainure afin d' immobiliser celui-ci et maintenir le plateau du dossier en position rabattue, se **caractérise en ce que** le levier de déverrouillage est agencé pour entraîner, dans son mouvement de rotation vis-à-vis du flasque, une biellette pivotante dont le déplacement libère le doigt de commande.

Selon une autre caractéristique, le flasque est soumis en permanence à un effort de poussée vers sa position maximale dirigée vers l'avant à l'encontre des moyens débrayables, exercé par une barre de torsion comportant une tige d'actionnement dont une extrémité est solidarisée à l'assise et dont l'autre extrémité est en prise avec l'arrière du dossier pour assurer son redressement autour du second axe.

Selon encore une autre caractéristique, le levier de déverrouillage automatique provoque dans sa rotation le déplacement d'un loquet de commande des moyens débrayables, relié au levier par l'intermédiaire d'un téton prévu sur ce levier et engagé dans un oeillet du loquet.

Notamment et dans un mode de réalisation particulier, non exclusif, le déplacement du loquet de commande provoqué par le levier de déverrouillage, assure dans les moyens débrayables, le désengagement d'au moins un secteur cranté ou similaire, en prise avec une couronne dentée de maintien, afin de libérer le dossier en rotation autour du second axe et assurer son redressement dans sa position maximale vers l'avant.

Avantageusement, la biellette entraînée par le levier de déverrouillage comporte une encoche ouverte, propre à coopérer avec une saillie du levier pour provoquer son pivotement autour d'un axe de rotation de cette biellette, porté par le flasque et parallèle à l'axe de rotation du levier, en libérant le doigt de commande solidaire du plateau d'appui.

Dans un mode de réalisation préféré, le levier de déverrouillage présente un profil coudé, propre à contourner la rainure circulaire du flasque et à éviter qu'il n'interfère mécaniquement avec le doigt de commande lorsque celui-ci décrit cette rainure après sa libération par suite du pivotement de la biellette entraînée par la rotation de ce levier.

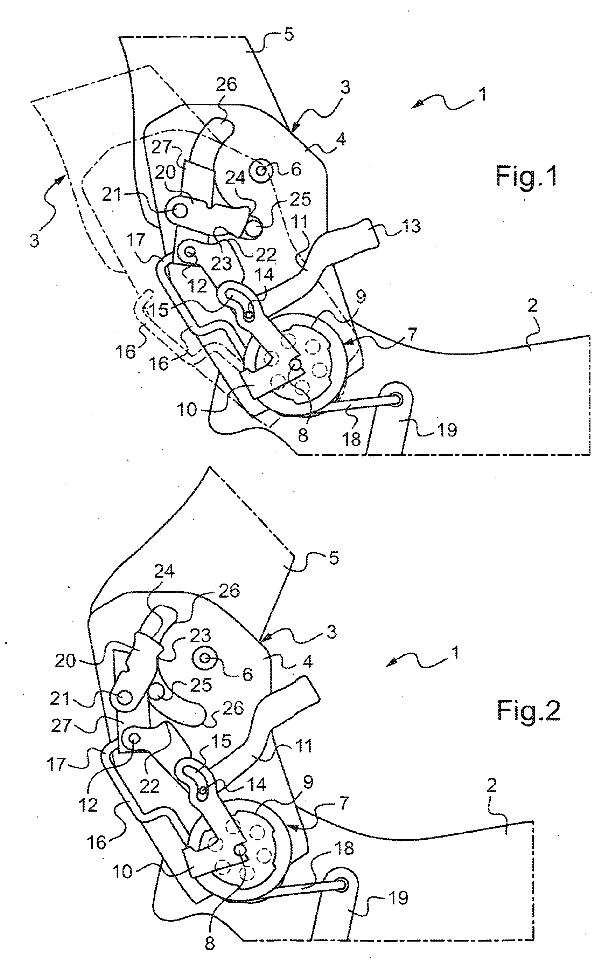

D'autres caractéristiques d'un dispositif conforme à l'invention apparaîtront encore à travers la description qui suit d'un exemple de réalisation, donné à titre indicatif et non limitatif en référence aux dessins annexés sur lequel les figures 1 à 4 sont des vues partielles en élévation du dispositif pour siège arrière de véhicule automobile considéré, permettant de réaliser sa mise en tablette par rabattement et blocage en position du dossier de ce siège sur son assise, ce dispositif étant illustré sur ces figures au cours de diverses phases successives de mise en oeuvre de ce rabattement.

Sur ces figures, la référence 1 désigne schématiquement et de façon générale un siège arrière pour véhicule automobile, muni notamment de moyens conformes à l'invention permettant, une fois le dossier du siège rabattu et appliqué contre son assise, d'être ensuite basculé autour d'un point de pivotement lié à cette dernière afin d'escamoter totalement ce siège dans une cuvette ou une fosse prévue à cet effet dans le plancher du véhicule, en réalisant au préalable ce qu'il est convenu d'appeler une « mise en tablette » du dossier.

Les dispositions structurelles et fonctionnelles qui permettent notamment d'introduire et de maintenir en position le siège une fois replié dans la cuvette de réception ne sont pas représentées sur les figures, ne faisant pas partie en elles-mêmes de l'invention.

Le siège 1 comporte principalement une assise 2 et un dossier 3, ces organes essentiels étant entourés d'une garniture de protection, également non représentée pour permettre de mieux voir les éléments caractéristiques de l'invention ainsi que de mieux comprendre la nature et le rôle du mécanisme qui permet d'en assurer la mise en oeuvre.

L'invention s'applique plus particulièrement à un siège dont le dossier 3 est constitué d'un flasque 4 et d'un plateau d'appui dorsal 5, articulés l'un à l'autre autour d'un premier axe transversal 6, permettant notamment de basculer le plateau vers l'assise et de le rabattre étroitement sur celle-ci.

Le dossier 3, ainsi formé du flasque 4 et du plateau 5, est associé à des moyens débrayables 7, constitués notamment à l'aide d'un ensemble articulé avec le dossier 3 sur l'assise 2 autour d'un second axe transversal 8, parallèle à l'axe 6 mais disposé à la partie inférieure du flasque 4, ces moyens débrayables étant conçus de telle sorte qu'ils permettent de modifier l'orientation relative du dossier 3 dans son ensemble par rapport à une position initiale sensiblement verticale par rapport à l'assise afin d'accroître à la demande de l'usager le confort de celui-ci, le dossier 3 pouvant ainsi, comme schématisé en traits mixtes sur la Figure 1, occuper une position inclinée vers l'arrière, variable selon les modèles de véhicule, généralement avec un angle pouvant aller jusqu'à 10 ou 15°, ces valeurs n'étant toutefois données qu'à titre purement indicatif.

La réalisation particulière des moyens débrayables 7, en eux-mêmes classiques et mis en oeuvre sur de nombreux types de véhicules, n'importe pas directement à l'invention, de sorte qu'il n'est pas nécessaire de les décrire ici de façon détaillée, ces moyens pouvant par exemple être du genre de ceux décrits dans le brevet allemand DE 32 11158 ou dans le brevet européen EP 0 023 863.

Notamment, ces moyens peuvent comporter une couronne crantée 9, apte à pivoter avec le dossier 3 autour du second axe 8, cette couronne étant adaptée à coopérer, par des secteurs dentés successifs de celle-ci, en fonction du basculement imposé au dossier 3, avec une crémaillère ou pièce analogue (non représentée) de blocage en position du dossier, actionnée par la manoeuvre d'un loquet 10, permettant notamment de faire tourner la couronne pas à pas.

La manoeuvre du loquet 10 s'effectue à l'aide d'un levier de déverrouillage 11, monté pivotant sur le flasque 4 autour d'un axe 12 et prolongé par une poignée de manoeuvre 13 que l'usager, assis sur le siège 1, peut lui-même manoeuvrer lorsqu'il souhaite faire varier l'inclinaison du dossier 3, en débloquant la couronne dentée 9 et en exerçant un effort en arrière sur le dossier 3 avec son dos jusqu'à atteindre l'angle de basculement souhaité à un moment où le relâchement du levier bloque à nouveau le dossier 3 dans la position atteinte.

Dans ce but, le levier de déverrouillage 11 comporte un téton 14 engagé dans un oeillet 15 du loquet 10, le profil courbe de cet oeillet étant tel qu'il autorise le basculement vers le haut du levier autour de son axe 12 en exerçant sur le loquet un effort de relèvement transmis aux moyens débrayables 7 pour libérer momentanément ceux-ci en libérant le dossier libre en rotation sur le second axe 8. Le relâchement du levier 11 permet inversement au loquet 10 de revenir en position initiale et de bloquer à nouveau le dossier 3, dans la position atteinte au moment de ce relâchement.

Une barre de torsion 16 est montée entre l'assise 2 et le dossier 3 pour exercer en permanence sur ce dernier un effort de poussée vers l'avant tendant, lorsque les moyens débrayables 7 sont mis hors service par le levier de déverrouillage 11, à ramener ce dossier vers sa position maximale vers l'avant, dans laquelle il est sensiblement vertical, soit donc dans une position qui est la sienne lorsque le dossier n'est pas incliné vers l'arrière de la manière précisée ci-dessus.

A cet effet, la barre de torsion 16 comporte une extrémité 17 en prise avec l'arrière du dossier 3, l'extrémité opposée 18 de la barre étant reliée à une patte de fixation 19, solidaire de l'assise 2.

Conformément à l'invention, le dossier 3 est muni de moyens complémentaires permettant, dans un premier temps, de ramener le dossier par pivotement autour du second axe transversal 8 dans sa position maximale avant, en agissant sur les moyens débrayables 7 de la façon décrite ci-dessus, puis dans un second temps, de faire basculer manuellement le plateau d'appui dorsal 5 autour du premier axe transversal 6 par rapport au flasque 4 afin de le rabattre contre l'assise 2, ces moyens étant agencés de telle sorte qu'une fois ce rabattement effectué, correspondant à la mise en tablette du dossier, celui-ci reste bloqué dans cette position afin notamment d'éviter, lorsque l'ensemble est escamoté dans le plancher du véhicule, que ne puisse se produire un relèvement intempestif de ce dossier, en particulier du plateau 5.

Dans ce but, le levier de déverrouillage 11 est prévu pour coopérer avec une biellette pivotante 20, articulée sur le flasque 4 du dossier 3 autour d'un axe 21, parallèle à l'axe 12 autour duquel tourne ce levier lorsqu'il est tiré vers le haut par l'usager.

Avantageusement, le levier 11 comporte latéralement une saillie 22, propre à coopérer avec une encoche ouverte 23 de la biellette 20 pour que le relèvement de celle-ci, qui lui est imposé par le pivotement du levier 11 autour de l'axe 12, s'effectue de façon sûre.

La biellette 20 comporte, à l'opposé de son axe de rotation 21, une extrémité profilée 24, adaptée à bloquer un doigt de commande 25, solidaire du plateau dorsal 5 et propre à se déplacer à l'intérieur d'une rainure circulaire 26 ménagée dans le flasque 4, le centre de cette rainure coïncidant avec le premier axe transversal 6.

Dans ces conditions, on comprend immédiatement que, lorsque la biellette 20 est relevée vers le haut par suite de l'effort exercé dans cette direction par le levier de déverrouillage 11 qui engage sa saillie 22 dans l'encoche 23, le doigt de commande 25 se trouve libéré et peut décrire la rainure circulaire 26 quand le plateau d'appui dorsal 5 est basculé autour de l'axe transversal 6 pour être rabattu contre l'assise 2 selon une cinématique que la succession des figures 1 à 4 illustre clairement.

Avantageusement, le levier 11 présente un profil coudé dans sa partie médiane, entre son axe de pivotement 12 et sa poignée de manoeuvre 13, ce profil lui permettant de contourner convenablement la rainure circulaire 26 lors de son relèvement par l'usager, en évitant qu'il n'interfère mécaniquement avec le doigt de commande 25 et en permettant à celui-ci de décrire la rainure lorsqu'il est libéré, consécutivement au pivotement de la biellette 20 de la manière précisée plus haut.

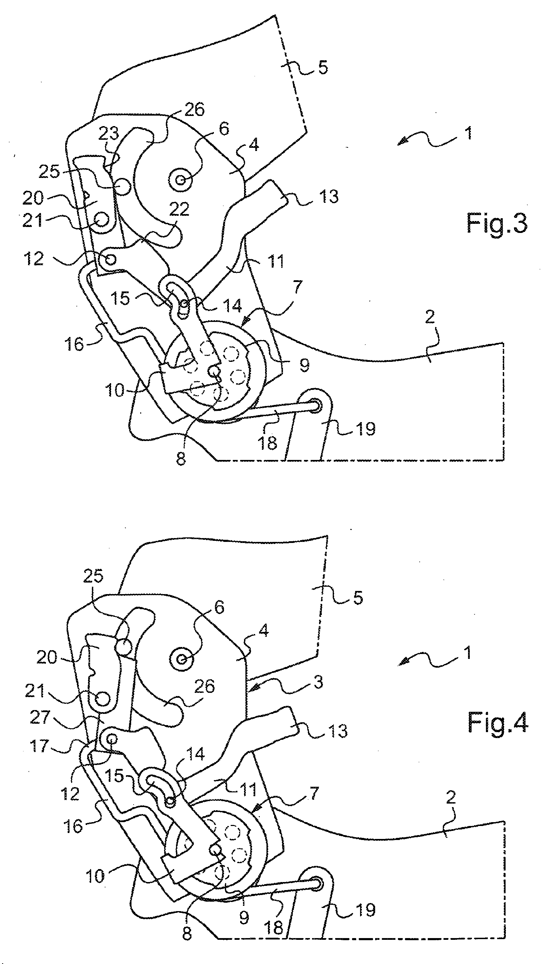

Selon l'invention, le levier 11, outre son action sur la biellette pivotante 20 en vue de libérer le doigt 25 dans la rainure circulaire 26, est agencé de manière à permettre, en fin de course de ce doigt, de le bloquer dans la position atteinte une fois réalisé le rabattement complet du plateau 5 sur l'assise 2 dans la position illustrée sur la Figure 4.

Pour assurer ce blocage, le levier de déverrouillage 11 est solidarisée d'une extension 27, qui pivote avec lui autour de l'axe 12 lorsque ce levier est relevé par l'usager agissant sur la poignée 13, le basculement vers le haut du levier écartant l'extension du profil de la rainure 26 et permettant au doigt 25 de décrire celle-ci avant que le relâchement de cette poignée et l'effort en sens inverse dû à un ressort de rappel (non représenté) ne ramène l'extension 27 au droit de cette rainure, en immobilisant cette fois le doigt, comme représenté sur la figure 4.

Le fonctionnement du dispositif conforme à l'invention se déduit aisément des explications qui précèdent.

Initialement, le dossier 3 du siège 1 est dans une position donnée, sensiblement verticale par rapport à l'assise 2 ou plus ou moins inclinée vers l'arrière en fonction de l'angle souhaité par l'usager pour améliorer son confort.

A partir de cette position, en vue de réaliser la mise en tablette du dossier, la manoeuvre consiste, dans un premier temps, à exercer une action de relèvement du levier de déverrouillage 11 autour de son axe 12 par sa poignée de manoeuvre 13, de telle sorte que son téton 14 s'engage dans l'oeillet 15 du loquet 10 et en déplaçant celui-ci, agisse sur les moyens débrayables 7 pour libérer le dossier.

Dans cette situation, la barre de torsion 16 applique instantanément un effort de rappel sur le dossier 3, qui le ramène dans sa position maximale vers l'avant en le faisant pivoter autour du second axe transversal 8.

Simultanément, le relèvement du levier 11 provoque l'engagement de sa saillie 22 dans l'encoche 23 de la biellette pivotante 20 et le basculement de celle-ci vers le haut autour de son axe 21, son extrémité profilée 24 se dégageant du doigt de commande 25, en même temps que l'extension 27 se déporte vers l'arrière, à l'extérieur de la rainure 26.

Dans un second temps, on peut exercer sur le plateau dorsal 5 un effort manuel de basculement autour du premier axe transversal 6 jusqu'à ce que ce plateau soit amené sensiblement dans une position où il est parallèle à l'assise 2 en étant appliqué au plus près de celle-ci, comme illustré sur les Figures 2 et 3.

Le relâchement final du levier 11, revenant dans la position illustrée sur la figure 4 sous l'effet de son ressort de rappel, fait simultanément basculer l'extension 27 qui s'engage alors au droit de la rainure circulaire 26 sous le doigt 25, en bloquant désormais ce dernier qui ne peut plus revenir dans sa position initiale, le plateau d'appui dorsal 5 restant appliqué sur l'assise 2 dans la situation correspondante dite de mise en tablette, sans possibilité de relèvement non commandé, aussi longtemps qu'une nouvelle action sur le levier 11 n'est pas exercée.

Le siège 1 avec son dossier 3 ainsi replié et verrouillé en position tablette, peut alors être basculé dans son ensemble pour être escamoté dans la cuvette du plancher du véhicule comme déjà indiqué. Dans cette position, son déverrouillage peut à tout moment être réalisé en actionnant un levier complémentaire ou analogue (non représenté), solidaire ou de préférence articulé sur le levier 11 pour lui permettre de s'effacer avec le siège sous le plancher, ce levier complémentaire étant apte, après avoir réalisé le déblocage du dossier par action sur le levier 11, à exercer sur le siège l'effort de relevage souhaité afin de le ramener en position d'utilisation normale.

On réalise ainsi un dispositif simple qui permet, par l'action du seul levier de déverrouillage pivotant qui provoque l'inclinaison à la demande du dossier vers l'arrière pour améliorer le confort de l'usager, d'autoriser, après remise en position maximale vers l'avant de ce dossier, le pivotement commandé manuellement du plateau vis-à-vis du flasque en direction de l'assise et, en fin de mouvement, le blocage automatique de ce dossier telle sorte que, une fois le siège replié escamoté dans le plancher du véhicule, le dossier ne puisse se relever de façon non commandée.

## Revendications

1. Dispositif de déverrouillage du dossier d'un siège arrière (1) de véhicule automobile comportant une assise (2) et un dossier (3) constitué d'un plateau d'appui dorsal (5), articulé autour d'un premier axe transversal (6) permettant de rabattre manuellement ce plateau sur l'assise, et d'un flasque (4) de support du plateau, ce flasque étant lui-même monté à rotation autour d'un second axe transversal (8), parallèle au premier, porté par l'assise de manière à permettre de modifier l'orientation relative du dossier par rapport à la verticale pour augmenter le confort de l'usager, le flasque (4) de support comportant des moyens d'immobilisation débrayables (7) pour le redressement automatique du dossier (3) dans une position maximale dirigée vers l'avant, ces moyens coopérant avec un levier de déverrouillage (11) articulé sur le flasque et apte à être actionné par l'usager, un doigt de commande(25)étant solidaire du plateau d'appui dorsal (5) du dossier (3), ce doigt (25) étant propre à décrire une rainure circulaire (26) ménagée dans le flasque (4) lorsque le plateau pivote autour du premier axe (6) pour être rabattu sur l'assise (2), le levier (11) comportant une extension (27) qui pivote avec lui de telle sorte que, dans un premier temps, il agit sur les moyens débrayables (7) pour provoquer le redressement du dossier (3) dans sa position maximale vers l'avant autour du second axe, avant que l'extension (27) du levier (11) ne se dispose, dans un second temps, sous le doigt de commande (25) dans sa rainure (26) afin d'immobiliser celui-ci et maintenir le plateau (5) du dossier (3) en position rabattue, **caractérisé en ce que** le levier de déverrouillage (11) est agencé pour entraîner, dans son mouvement de rotation vis-à-vis du flasque (4), une biellette pivotante (20) dont le déplacement libère le doigt de commande (25).

2. Dispositif selon la revendication 1, **caractérisé en ce que** le flasque (4) est soumis en permanence à un effort de poussée vers sa position maximale dirigée vers l'avant à l'encontre des moyens débrayables (7), exercé par une barre de torsion (16) comportant une tige d'actionnement dont une extrémité (18) est solidarisée à l'assise (2) et dont l'autre extrémité (17) est en prise avec l'arrière du dossier (3) pour assurer son redressement autour du second axe (8).

3. Dispositif selon l'une des revendications 1 ou 2, **caractérisé en ce que** le levier de déverrouillage automatique (11) provoque dans sa rotation le déplacement d'un loquet de commande (10) des moyens débrayables (7), relié au levier par l'intermédiaire d'un téton (14) prévu sur ce levier et engagé dans un oeillet (15) du loquet.

4. Dispositif selon la revendication 3, **caractérisé en ce que** le déplacement du loquet de commande (10) provoqué par le levier de déverrouillage (11) assure dans les moyens débrayables, le désengagement d'au moins un secteur cranté ou similaire, en prise avec une couronne dentée de maintien, afin de libérer le dossier (3) en rotation autour du second axe (8) et assurer son redressement dans sa position maximale vers l'avant.

5. Dispositif selon l'une quelconque des revendications 1 à 4, **caractérisé en ce que** la biellette (20) entraînée par le levier de déverrouillage (11) comporte une encoche ouverte (23), propre à coopérer avec une saillie (22) du levier pour provoquer son pivotement autour d'un axe de rotation (21) de cette biellette, porté par le flasque (4) et parallèle à l'axe de rotation (12) du levier (11), en libérant le doigt de commande (25) solidaire du plateau d'appui (5).

6. Dispositif selon l'une quelconque des revendications 1 à 5, **caractérisé en ce que** le levier de déverrouillage (11) présente un profil coudé propre à contourner la rainure circulaire (26) du flasque (4) et à éviter qu'il n'interfère mécaniquement avec le doigt de commande (25) lorsque celui-ci décrit cette rainure après libération par le pivotement de la biellette (20) entraînée par la rotation de ce levier.

## Claims

1. An unlocking device of the backrest of a rear seat unit (1) of an automobile, comprising a seat (2) and a backrest (3) constituted by a dorsal support panel (5), articulated about a first transverse axis (6) allowing this panel to be folded down manually on the seat, and by a support side-piece (4) of the panel, this side-piece itself being mounted in rotation about a second transverse axis (8), parallel to the first, carried by the seat so as to allow the relative orientation of the backrest to be altered with respect to the vertical to increase the comfort of the user, the support side-piece (4) comprising releasable securing means (7) for the automatic straightening of the backrest (3) in a maximum position directed towards the front, these means cooperating with an unlocking lever (11), articulated on the side-piece and suited to be actuated by the user, a control finger (25) being integral with the dorsal support panel (5) of the backrest (3), this finger (25) being suited to describe a circular groove (26) arranged in the side-piece (4) when the panel pivots about the first axis (6) to be folded down on the seat (2), the lever (11) comprising an extension (27) which pivots with it such that firstly it acts on the releasable means (7) to bring about the straightening of the backrest (3) in its maximum position towards the front about the second axis, before the extension (27) of the lever (11) is disposed, secondly under the control finger (25) in its grove (26) so as to secure it and to keep the panel (5) of the backrest (3) in the folded-down position, **characterized in that** the unlocking lever (11) is arranged to entrain, in its rotation movement with respect to the side-piece (4), a pivoting link (20), the displacement of which frees the control finger (25).

2. The device according to Claim 1, **characterized in that** the side-piece (4) is permanently subjected to a thrust stress towards its maximum position directed towards the front against the releasable means (7), exerted by a torsion bar (16) comprising an actuating rod, one end (18) of which is secured to the seat (2) and the other end (17) of which is engaged with the rear of the backrest (3) to ensure its straightening about the second axis (8).

3. The device according to one of Claims 1 or 2, **characterized in that** the automatic unlocking lever (11) brings about in its rotation the displacement of a control latch (10) of the releasable means (7), connected to the lever by means of a teat (14) provided on this lever and engaged in an eye (15) of the latch.

4. The device according to Claim 3, **characterized in that** the displacement of the control latch (10) caused by the unlocking lever (11) ensures in the releasable means the disengagement of at least one notched sector or similar, engaged with a toothed securing crown, so as to free the backrest (3) in rotation about the second axis (8) and to ensure its straightening in its maximum position towards the front.

5. The device according to any one of Claims 1 to 4, **characterized in that** the link (20) entrained by the unlocking lever (11) comprises an open notch (23), suited to cooperate with a projection (22) of the lever to bring about its pivoting about a rotation axis (21) of this link, carried by the side-piece (4) and parallel to the rotation axis (12) of the lever (11), freeing the control finger (25) integral with the support panel (5).

6. The device according to any one of Claims 1 to 5, **characterized in that** the unlocking lever (11) presents a bent profile suited to pass around the circular groove (26) of the side-piece (4) and to prevent it from interfering mechanically with the control finger (25) when the latter describes this groove after freeing by the pivoting of the link (20) entrained by the rotation of this lever.

## Patentansprüche

1. Vorrichtung zum Entriegeln der Rückenlehne eines Rücksitzes (1) eines Kraftfahrzeugs, der eine Sitzfläche (2) und eine Rückenlehne (3) aufweist, die aus einer Rückstützplatte (5) besteht, die um eine erste Querachse (6) angelenkt ist, die es erlaubt, diese Platte manuell auf die Sitzfläche zu klappen, und aus einem Stützflansch (4) der Platte, wobei dieser Flansch selbst um eine zweite Querachse (8), die zur ersten parallel ist, drehend montiert ist, die von der Sitzfläche derart getragen wird, dass sie es erlaubt, die relative Ausrichtung der Rückenlehne in Bezug zur Senkrechten zu ändern, um den Komfort des Benutzers zu steigern, wobei der Stützflansch (4) auskuppelbare Mittel zum Feststellen (7) für das automatische Aufstellen der Rückenlehne (3) in eine maximale Position, die nach vorn gerichtet ist, erlaubt, wobei diese Mittel mit einem Entriegelungshebel (11) zusammenwirken, der auf dem Flansch angelenkt ist und vom Benutzer betätigt werden kann, wobei ein Steuerfinger (25) fest mit der Rückenstützplatte (5) der Rückenlehne (3) verbunden ist, wobei dieser Finger (25) eine kreisförmige Nut (26) beschreiben kann, die in dem Flansch (4) eingerichtet ist, wenn die Platte um die erste Achse (6) schwenkt, um auf die Sitzfläche (2) geklappt zu werden, wobei der Hebel (11) eine Erweiterung (27) aufweist, die mit ihm derart schwenkt, dass er erstens auf die auskuppelbaren Mittel (7) einwirkt, um das Aufstellen der Rückenlehne (3) in ihre maximale Position nach vorn um die zweite Achse zu bewirken, bevor die Erweiterung (27) des Hebels (11) sich zweitens unter dem Steuerfinger (25) in seiner Nut (26) ablegt, um diesen festzustellen und die Platte (5) der Rückenlehne (3) in herunter geklappter Stellung zu halten, **dadurch gekennzeichnet, dass** der Entriegelungshebel (11) eingerichtet ist, um in seiner Drehbewegung gegenüber dem Flansch (4) einen Schwingarm (20) mitzunehmen, dessen Bewegen den Steuerfinger (25) freigibt.

2. Vorrichtung nach Anspruch 1, **dadurch gekennzeichnet, dass** der Flansch (4) ständig eine Schubkraft zu seiner maximalen nach vorn gerichteten Position gegen auskuppelbare Mittel (7) ausgesetzt ist, die von einer Torsionsstange (16) ausgeübt wird, die einen Betätigungsschaft aufweist, von dem ein Ende (18) fest mit der Sitzfläche (2) verbunden ist, und dessen anderes Ende (17) mit der Rückseite der Rückenlehne (3) im Eingriff ist, um deren Aufstellen um die zweite Achse (8) sicherzustellen.

3. Vorrichtung nach einem der Ansprüche 1 oder 2, **dadurch gekennzeichnet, dass** der automatische Entriegelungshebel (11) bei seiner Drehung das Verlagern einer Steuerklinke (10) der auskuppelbaren Mittel (7), die mit dem Hebel über einen Zapfen (14) verbunden ist, der auf diesem Hebel vorgesehen ist und in eine Öse (15) der Klinke eingreift, verursacht.

4. Vorrichtung nach Anspruch 3, **dadurch gekennzeichnet, dass** das Verlagern der Steuerklinke (10), das von dem Entriegelungshebel (11) verursacht wird, in den auskuppelbaren Mitteln das Ausrücken mindestens eines Zahnsektors oder Ähnlichem, der mit einem Haltezahnkranz in Eingriff ist, sicherstellt, um die Rückenlehne (3) in Drehung um die zweite Achse (8) zu befreien und ihr Aufstellen in die maximale Position nach vorn sicherzustellen.

5. Vorrichtung nach einem der Ansprüche 1 bis 4, **dadurch gekennzeichnet, dass** der Schwingarm (20), der von dem Entriegelungshebel (11) angetrieben wird, eine offene Kerbe (23) aufweist, die mit einem Vorsprung (22) des Hebels zusammenwirken kann, um sein Schwenken um eine Rotationsachse (21) dieses Schwingarms auszulösen, der von dem Flansch (4) getragen wird, und parallel zu der Rotationsachse (12) des Hebels (11), indem der Steuerfinger (25), der fest mit der Stützplatte (5) verbunden ist, frei gegeben wird.

6. Vorrichtung nach einem der Ansprüche 1 bis 5, **dadurch gekennzeichnet, dass** der Entriegelungshebel (11) ein Winkelprofil aufweist, das die kreisförmige Nut (26) des Flanschs (4) umgehen und verhindern kann, dass er mechanisch mit dem Steuerfinger (25) interferiert, wenn dieser diese Nut nach dem Freigeben durch Schwenken des Schwingarms (20), der von der Drehung dieses Hebels angetrieben wird, beschreibt.
